# EUROPEAN PATENT SPECIFICATION

(11) **EP 1 456 845 B1**
(45) Date of publication and mention of the grant of the patent: **01.09.2010**
(21) Application number: 02795845.3
(22) Date of filing: 12.12.2002
(51) Int. Cl.: G11B 27/10, G11B 27/28, G11B 27/34

(54) **VIDEO INDEXING USING HIGH RESOLUTION STILL IMAGES**
VIDEOINDIZIERUNG MIT HOCHAUFLÖSENDEN STANDBILDERN
INDEXATION VIDEO UTILISANT DES IMAGES FIXES A HAUTE RESOLUTION

(30) Priority: 21.12.2001 US 23812
(43) Date of publication of application: 15.09.2004
(73) Proprietor: Hewlett-Packard Company, Palo Alto, CA 94304-1112 (US)
(72) Inventor: OBRADOR, Pere, Mountain View, CA 94043 (US)
(74) Representative: Jehan, Robert
(86) International application number: PCT/US2002/039804
(87) International publication number: WO 2003/056559

(56) References cited:
- EP-A- 1 005 043
- GB-A- 2 327 526
- PATENT ABSTRACTS OF JAPAN vol. 1998, no. 06, 30 April 1998 (1998-04-30) & JP 10 042248 A (SHARP CORP), 13 February 1998 (1998-02-13)

## Description

### Technical Field

The technical field relates to video imaging system, and, in particular, to video indexing system.

### Background

Users are increasingly using video cameras to record home videos, television programs, movies, concerts, or sports events on a disk or DVD for later or repeated viewing. A video camera typically records both video and audio to generate a video sequence, which can be stored in a secondary storage, such as a hard disk or a CD-ROM.

Such video sequences typically have varied content or great length. Since a user normally cannot write down what is on a video sequence or where on a video sequence particular scenes, movies, events are recorded, the user may have to sit and view an entire video sequence to remember what was recorded or to retrieve a particular scene. Video indexing allows a user to have easy access to different sections of the video sequence so that the user do not need to fast forward through the whole video sequence.

Current video indexing devices use video content analysis that automatically or semiautomatically extracts structure and meaning from visual cues in a video. After, for example, a video clip is taken from a television (TV) program or a home video, a computer will generate particular indexes so that a user can jump to a particular section in the video sequence.

However, automatic video indexing typically generates different key frames, with the need for extensive post-processing, which involves automatic search for shot changes, scene changes, and ultimately, frames that may serve as key-frames. In addition, automatic video indexing may or may not help a user find a particular video event within a recording.

EP-A-100503 discloses a method and apparatus enabling index images of video to be referenced and stored. JP 10042248 discloses a system for generating index images for video.

### Summary

According to an aspect of the present invention, there is provided a method according to claim 1. In an embodiment of the present invention, a method for video indexing uses still images. The still images are acquired during a video sequence recording using an image/video acquisition device. The video sequence and the still images are processed in parallel by the image/video acquisition device, and the video sequence is indexed using the processed still images, so that a user can selectively view the video sequence using the still images as video indices. Since the still images used to index video files are acquired during the video sequence recording, the user can jump directly to a position within the video files where a particular still image is acquired without the need to fast forward or rewind.

The still images typically have higher resolution than the video sequence. By selecting the high resolution still images to capture memorable moments, the user is able to easily index the video sequence using the most memorable still image pictures and to later view the video sequence around the instances of the still images.

### Description of the Drawings

The preferred embodiments of the method for video indexing using high resolution still images will be described in detail with reference to the following figures, in which like numerals refer to like elements, and wherein:
Figure 1 illustrates an exemplary joint video and still image pipeline;
Figure 2 illustrates an exemplary method for video indexing using high resolution still images;
Figure 3 illustrates an exemplary image/video acquisition device that processes, transmits, and stores video sequences and high resolution still images in parallel;
Figure 4 illustrates an exemplary hardware components of a computer that may be used to in connection with the exemplary method of Figure 2 for video indexing using high resolution still images; and
Figure 5 is a flow chart illustrating the exemplary method of Figure 2 for video indexing using high resolution still images.

### Detailed Description

Using a image/video acquisition device, a user may acquire still image pictures at the same time as a video sequence recording. The still images typically capture memorable moments and may be used to index the video sequence so that a user may selectively view the video sequence using the still images as video indices. The video indices are similar to chapters within digital video disc (DVD) movies that enable a user to jump directly to a particular chapter without having to fast forward.

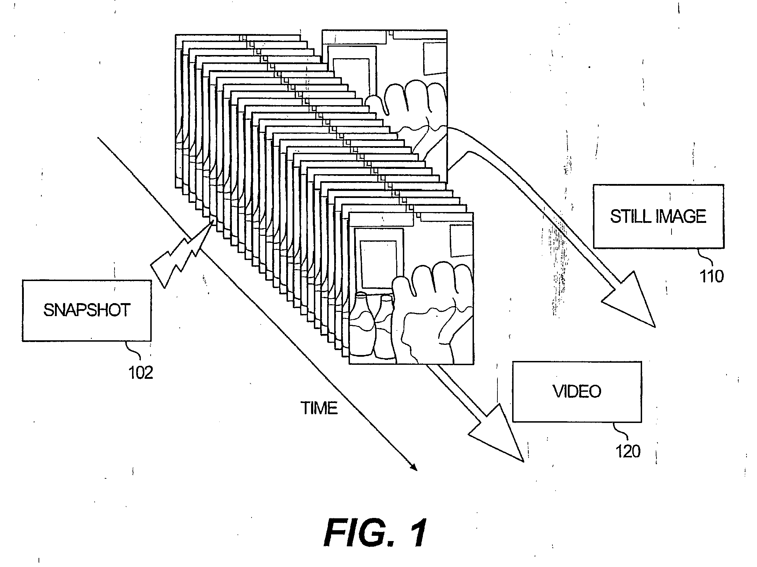

Figure 1 illustrates an exemplary joint video and still image pipeline. The exemplary joint video and still image pipeline is capable of delivering a video sequence 120 and still images 110 at the same time. For example, while the video sequence 120 is being recorded, a snapshot 102 may be taken to generate a still image 110. The processing of the video sequence 120 and the still image 110 may be in parallel. The joint video and still image pipeline is described, for example, in U.S. Patent Application, entitled "Concurrent Dual Pipeline for Acquisition, Processing and Transmission of Digital Video and High Resolution Digital Still Photographs," filed on the same day herewith.

The joint video and still image pipeline leverages existing processing from cameras, i.e., demosaicing, color processing, and image compression. Additionally, the joint video and still image pipeline takes advantage of existing expertise on digital video, i.e., video compression and video streaming and transcoding. The still images 110 typically have high resolution with, for example, 2-4 mega pixels. The high resolution still images 110 also have sophisticated demosaicing that leaves almost no demosaicing artifacts and high quality color correction that generates accurate color. On the other hand, the video sequence 120 typically has mid or low resolution, for example, 640 x 480 resolution. In contrast to high resolution still images 110, the mid or low resolution videos 120 have fast demosaicing and fast color correction, which produces high frame rate. The video is then compressed and streamed with low delay and good error protection.

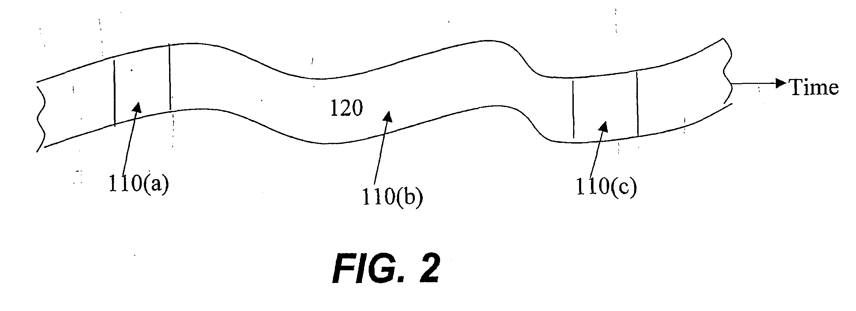

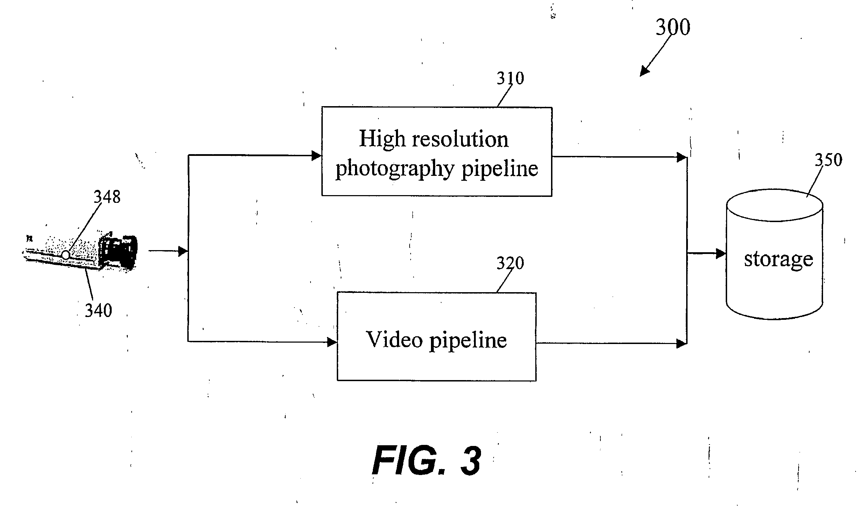

Figure 2 illustrates an exemplary method for video indexing using high resolution still images 110. During a video sequence 120 recording, high resolution still images 110 may be acquired by a user, for example, by pressing a snapshot button 348 (shown in Figure 3) on an image/video acquisition device 300, such as a joint video and still image pipeline camera (shown in Figure 3). The high resolution still images 110 may be considered as key frames in the video sequence 120, and may be used to index the video sequence 120. The user may later selectively view the video sequence 120 using the high resolution still images 110 as video indices. Since the high resolution still images 110 typically capture the most memorable moments, linking the most memorable images to points in time within the video sequences 120 enables the user to relive memorable experiences around the high resolution still images 110.

Video indexing is described, for example, in "Content-Based Browsing of Video Sequences" by Arman et al., ACM multimedia, pages 97-103, 1994; and "Content Based Video Indexing and Retrieval" by Smoliar et al., IEEE multimedia, pages 62-72, 1994. Arman et al. disclose a novel methodology to represent the contents of a video sequence. The methodology uses a content-based browsing system that forms an abstraction to represent each shot of the sequence by using a representative frame, and allows a user to easily navigate the frame, i.e., rapidly view a video sequence in order to fined a particular point within the sequence. Smoliar et al. disclose a method for content-based video indexing and retrieval. The method includes parsing the video stream into generic clips, indexing the video clips when inserted into a database, and retrieval and browsing the database through queries based on text and/or visual examples.

For example, during a birthday party, a parent may snapshot a high resolution still image 110(a) of a child blowing candles without interrupting a video sequence 120 recording. Later, while still recording the birthday party, the parent may snapshot again to capture a high resolution still image 110(b) of kids playing games, or 110(c) of kids singing, and so on. The high resolution still images 110 acquired typically represent the most memorable moments of the event. The family may later use the high resolution still images 110 as video indexing and proceed directly to the most memorable moments in the video sequence 120.

Figure 3 illustrates an exemplary image/video acquisition device 300, such as a joint video and still image pipeline camera, that processes, transmits, and stores video sequences 120 and high resolution still images 110 in parallel. The camera 300 includes a sensor 340, a still image pipeline 310, a video pipeline 320, and a local storage 350. The still image pipeline 310 and the video pipeline 320 may be located on the camera's hardware/firmware, application specific integrated circuits (ASICs), microprocessor and/or digital signal processor. The local storage 350 may be a solid state memory, which is similar to SDMemory cards from Panasonic, or a microdrive, which is similar to microdrives hard drives from IBM. Using, for example, a snapshot button 348, the sensor 340 of the camera 300 may acquire high resolution still images 110 at the same time as recording a video sequence 120. Other types of user interaction, such as voice command or touch screen liquid crystal display (LCD), may be used to acquired the high resolution still images 110 during the video sequence recording. Next, the video sequence 120 and the still images 110 may be processed in parallel using the joint video and still image pipeline, 320 and 310, respectively. Thereafter, the video sequence 120 and the still images 110 may be transmitted and/or stored in the local storage 350 on the camera 300. Alternatively, the video sequence 120 and the still images 110 may be stored in a remote storage on a server/computer, such as a hard disk, a CD-ROM, or a server connected to a network. The high resolution still images 110 may be labeled, for example, as image #1, image #2, or image #3, within the video sequence 120 for easy indexing.

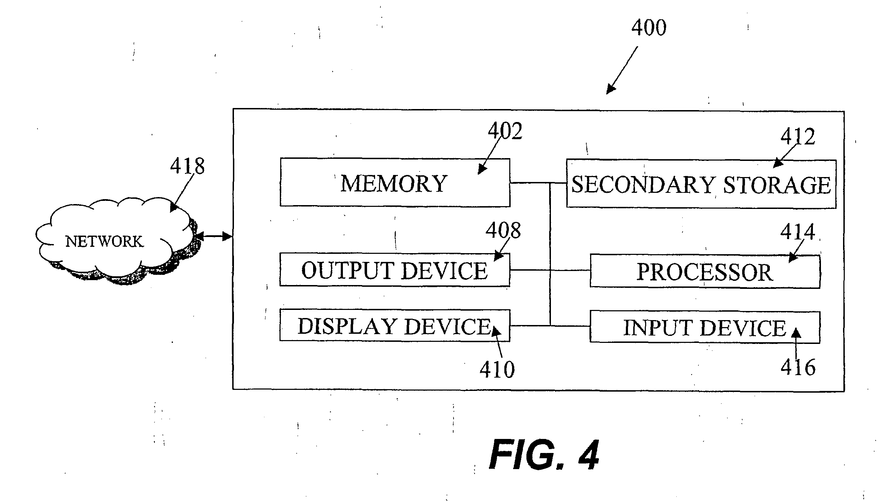

Figure 4 illustrates an exemplary hardware components of a computer 400 that may be used to in connection with the exemplary method for video indexing using high resolution still images 110. The computer 400 has a connection with a network 418, such as the Internet or other type of computer or telephone networks, for sending recorded video sequence 120 and still images 110 to friends and family by, for example, email. The computer 400 typically includes a memory 402, a secondary storage device 412, a processor 414, an input device 416, a display device 410, and an output device 408.

The memory 402 may include random access memory (RAM) or similar types of memory. The secondary storage device 412 may include a hard disk drive, floppy disk drive, CD-ROM drive, or other types of non-volatile data storage. The secondary storage device 412 may correspond with various databases or other resources. The processor 414 may execute applications or other information stored in the memory 402, the secondary storage 412, or received from the Internet or other network 418. The input device 416 may include any device for entering data into the computer 400, such as a keyboard, key pad, cursor-control device, touch-screen (possibly with a stylus), or microphone. The display device 410 may include any type of device for presenting visual image, such as, for example, a computer monitor, flat-screen display, or display panel. The output device 408 may include any type of device for presenting data in hard copy format, such as a printer, and other types of output devices including speakers or any device for providing data in audio form. The computer 400 can possibly include multiple input devices, output devices, and display devices.

Although the computer 400 is depicted with various components, one skilled in the art will appreciate that this computer can contain additional or different components. In addition, although aspects of an implementation consistent with the present invention are described as being stored in memory, one skilled in the art will appreciate that these aspects can also be stored on or read from other types of computer program products or computer-readable media, such as secondary storage devices, including hard disks, floppy disks, or CD-ROM; a carrier wave from the Internet or other network; or other forms of RAM or ROM. The computer-readable media may include instructions for controlling the computer 400 to perform a particular method.

After the video sequence 120 and the high resolution still images 110 are acquired by the camera 300, the video sequence 120 and the high resolution still images 110 may be downloaded to a computer 400 either by transmitting over wireless channels or through a wired connection, such as universal serial bus (USB) or Firewire (IEEE 1394). Alternatively, the computer 400 may read the local storage 350 of the camera 300 by directly connecting to a reader of the computer 400. After downloading the recorded video sequence 120 and the high resolution still images 110, the video sequence 120 may be played back either on a liquid crystal display (LCD) (not shown) of the camera 300 or on a display device 410 of the computer 400. The LCD or the display device 410 may display the high resolution still images 110 as labeled icons, for example, image #1, image #2, or image #3. A particular high resolution still image 110, for example, image #1, may be displayed by clicking on an associated icon as displayed on the display device 410.

In addition, the high resolution still images 110 may be used to index the video sequence 120. For example, when viewing the recorded video sequence 120 using the computer 400, a user may double click on one of the icons, for example, image #2, and start viewing the video sequence 120 from a point in time associated with the high resolution still image #2. By linking the most memorable images to points in time within the video sequence 120, the user may easily index the video sequence 120 using the most memorable still image pictures 110.

The video sequence 120 and the high resolution still images 110 may also be saved on a server connected to the network 418, to be retrieved by other users. Alternatively, the video sequence 120 and the high resolution still images 110 may be transmitted to other users through the network 418 by, for example, e-mail. A friend or a family member who receives the video sequence 120 and the still image 110 may then selectively view the video sequence 120 using the high resolution still images 110 as video indices.

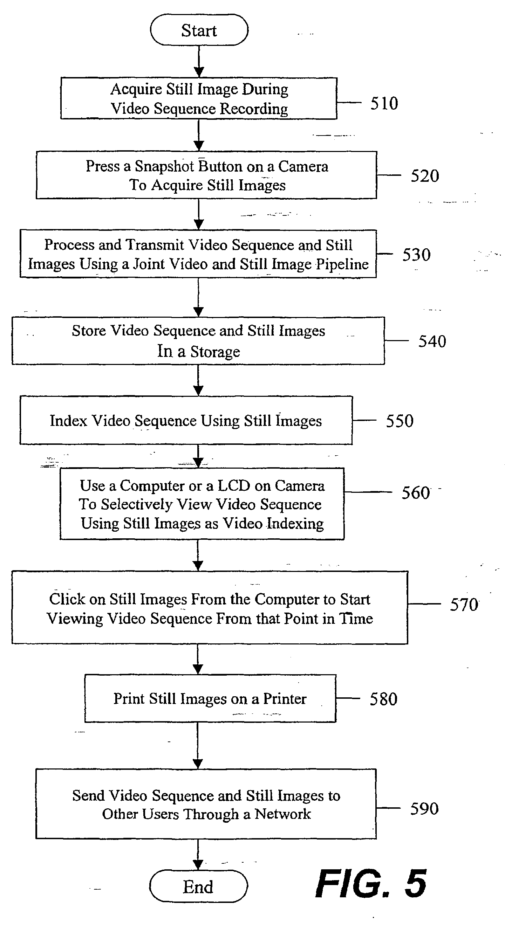

Figure 5 is a flow chart illustrating the exemplary method for video indexing using still images. An image/video acquisition device 300, such as a joint video and still image pipeline camera, enables a user to acquire still image pictures 110, which are typically high resolution still images, during a video sequence 120 recording, step 510. The still images 110 may be acquired during the video sequence 120 recording using, for example, a snapshot button 348, on the camera 300, step 520. Next, the video sequence 120 and the high resolution still images 110 may be processed using a joint video and still image pipeline, step 530. Both the video sequence 120 and the high resolution still images 110 may be transmitted and stored in a local storage 350 or a remote storage, step 540, where the high resolution still images 110 may be used to index the video sequence 120, step 550.

A computer may be used to selectively view the video sequence 120 using the high resolution still images 110 as video indices, step 560. Alternatively, the user may choose to view the video sequence 120 on the camera's LCD and use the still images 110 as video indices. The user may click on one of the high resolution still images 110 to start viewing the video sequence 120 from a point in time associated with that high resolution still image 110, step 570. The user may also print the high resolution still images 110, step 580. In addition, the video sequence 120 and the high resolution still images 110 may be sent through a network 418 to other users, such as friends and family, so that the other users may also selectively view the video sequence 120 using the high resolution still images 110 as video indices, step 590.

While the method and apparatus for video indexing using high resolution still images have been described in connection with an exemplary embodiment, those skilled in the art will understand that many modifications in light of these teachings are ossible^.

## Claims

1. A method for video indexing using still images, comprising:
acquiring(510) high resolution still images(110) during a mid or low resolution video sequence (120) recording using an image/video acquisition device(300); **characterized by**:
processing (530) the video sequence (120) and the still images (110) by the image/video acquisition device(300) wherein processing of the video sequence is performed by a video pipeline (320) in parallel to processing of the still images by a still image pipeline (310);
indexing (550) the processed video sequence (120) using the processed still images (110); and,
transmitting and/or storing the indexed video sequence (120) and processed still images (110), whereby a user can selectively view the video sequence (120) using the processed still images (110) as video indices.

2. The method of claim 1, wherein the acquiring step includes acquiring (510) high resolution still images (110) during the video sequence (120) recording.

3. The method of claim 1, wherein the acquiring step includes pressing (520) a button (348) on the image/video acquisition device (300) to acquire the still images (110) during the video sequence (120) recording.

4. The method of claim1, further comprising:
storing (540) the video sequence (120) and the still images (110) in a storage (350).

5. The method of claim 4, wherein the storing step includes storing (540) the video sequence (120) and the still images (110 in a local storage (350) on the image/video acquisition device (300).

6. The method of claim 4, wherein the storing step includes storing (540) the video sequence (120) and the still images(110) on a server connected to a network.

7. The method of claim 6, further comprising:
sending (590) the video sequence (120) and the still images (110) to other users through the network, whereby the other users can selectively view the video sequence (120) using the still images (110) as the video indices.

8. The method of claim 1, further comprising:
using (560) a computer (400) to selectively view the video sequence (120) using the still images (110) as the video indices.

9. The method of claim 8, further comprising:
clicking (570) on the still images (110) from the computer (400) to start viewing the video sequence (120) from a point in time associated with the still images (110).

10. The method of claim 8, further comprising:
printing (580) the still images(110) on a printer.

## Patentansprüche

1. Ein Verfahren zum Video-Indexieren unter Verwendung von Standbildern, umfassend:
Das Erfassen (510) hochauflösender Standbilder (110) während einer Videosequenz-(120)-Aufzeichnung mit mittlerer oder niedriger Auflösung unter Verwendung eines Bild-Nideo-Erfassungsgeräts (300); **gekennzeichnet durch**:
das Verarbeiten (530) der Videosequenz (120) und der Standbilder (110) **durch** das Bild-Nideo-Erfassungsgerät (300), wobei die Verarbeitung der Videosequenz **durch** eine Videopipeline (320) parallel zur Verarbeitung der Standbilder **durch** eine Standbildpipeline (310) ausgeführt wird,
das Indexieren (550) der verarbeiteten Videosequenz (120) unter Verwendung der verarbeiteten Standbilder (110); und
das Senden und/oder Speichern der indexierten Videosequenz (120) und der verarbeiteten Standbilder (110), wodurch ein Benutzer die Videosequenz (120) selektiv ansehen kann, indem er die verarbeiteten Standbilder (110) als Videoindizes verwendet.

2. Verfahren nach Anspruch 1, wobei der Erfassungsschritt das Erfassen (510) hochauflösender Standbilder (110) während der Videosequenz-(120)-Aufzeichnung umfasst.

3. Verfahren nach Anspruch 1, wobei der Erfassungsschritt das Drücken (520) einer Taste (348) am Bild-/Video-Erfassungsgerät (300) umfasst, um die Standbilder (110) während der Videosequenz-(120)-Aufzeichnung zu erfassen.

4. Verfahren nach Anspruch 1, weiter umfassend:
das Speichern (540) der Videosequenz (120) und der Standbilder (110) in einem Speicher (350).

5. Verfahren nach Anspruch 4, wobei der Speicherungsschritt die Speicherung (540) der Videosequenz (120) und der Standbilder (110) in einem lokalen Speicher (350) am Bild-/Video-Erfassungsgerät (300) umfasst.

6. Verfahren nach Anspruch 4, wobei der Speicherungsschritt die Speicherung (540) der Videosequenz (120) und der Standbilder (110) auf einem mit einem Netzwerk verbundenen Server umfasst.

7. Verfahren nach Anspruch 6, weiter umfassend:
das Senden (590) der Videosequenz (120) und der Standbilder (110) durch das Netzwerk an andere Benutzer, wodurch die anderen Benutzer die Videosequenz (120) selektiv ansehen können, indem sie die Standbilder (110) als Videoindizes verwenden.

8. Verfahren nach Anspruch 1, weiter umfassend:
das Verwenden (560) eines Computers (400), um die Videosequenz (120) selektiv anzusehen, indem die Standbilder (110) als Videoindizes verwendet werden.

9. Verfahren nach Anspruch 8, weiter umfassend:
das Klicken (570) auf die Standbilder (110) des Computers (400), um zu beginnen, die Videosequenz (120) von einem Zeitpunkt anzusehen, der mit den Standbildern (110) verbunden ist.

10. Verfahren nach Anspruch 8, weiter umfassend:
das Drucken (580) der Standbilder (110) auf einem Drucker.

## Revendications

1. Procédé d'indexation vidéo à l'aide d'images fixes, comprenant les étapes consistant à :
acquérir (510) des images fixes de résolution élevée (110) pendant un enregistrement de séquence vidéo de résolution intermédiaire ou faible (120) à l'aide d'un dispositif d'acquisition d'image/vidéo (300) ; **caractérisé par** le fait de :
traiter (530) la séquence vidéo (120) et les images fixes (110) par le dispositif d'acquisition d'image/vidéo (300), dans lequel le traitement de la séquence vidéo est effectué par un pipeline vidéo (320) en parallèle au traitement des images fixes par un pipeline d'image fixe (310),
indexer (550) la séquence vidéo traitée (120) à l'aide des images fixes traitées (110) ; et
transmettre et/ou stocker la séquence vidéo indexée (120) et les images fixes traitées (110), de sorte qu'un utilisateur puisse voir sélectivement la séquence vidéo (120) à l'aide des images fixes traitées (110) comme indices vidéo.

2. Procédé selon la revendication 1, dans lequel l'étape d'acquisition comprend l'acquisition (510) d'images fixes de résolution élevée (110) pendant l'enregistrement de la séquence vidéo (120).

3. Procédé selon la revendication 1, dans lequel l'étape d'acquisition comprend la pression (520) sur un bouton (348) sur le dispositif d'acquisition d'image/vidéo (300) pour acquérir les images fixes (110) pendant l'enregistrement de la séquence vidéo (120).

4. Procédé selon la revendication 1, comprenant, en outre, l'étape consistant à :
stocker (540) la séquence vidéo (120) et les images fixes (110) dans une mémoire (350).

5. Procédé selon la revendication 4, dans lequel l'étape de stockage comprend le stockage (540) de la séquence vidéo (120) et des images fixes (110) dans une mémoire locale (350) sur le dispositif d'acquisition d'image/vidéo (300).

6. Procédé selon la revendication 4, dans lequel l'étape de stockage comprend le stockage (540) de la séquence vidéo (120) et des images fixes (110) sur un serveur connecté à un réseau.

7. Procédé selon la revendication 6 comprenant, en outre, l'étape consistant à :
envoyer (590) la séquence vidéo (120) et les images fixes (110) à d'autres utilisateurs à travers le réseau, de sorte que les autres utilisateurs puissent voir sélectivement la séquence vidéo (120) à l'aide des images fixes (110) comme indices vidéo.

8. Procédé selon la revendication 1, comprenant, en outre, l'étape consistant à :
utiliser (560) un ordinateur (400) pour voir sélectivement la séquence vidéo (120) à l'aide des images fixes (110) comme indices vidéo.

9. Procédé selon la revendication 8, comprenant, en outre, l'étape consistant à :
cliquer (570) sur les images fixes (110) depuis l'ordinateur (400) pour démarrer la visualisation de la séquence vidéo (120) à partir d'un moment dans le temps associé aux images fixes (110).

10. Procédé selon la revendication 8, comprenant, en outre, l'étape consistant à :
imprimer (580) les images fixes (110) sur une imprimante.
